# EUROPÄISCHE PATENTSCHRIFT

(11) **EP 0 388 797 B1**
(45) Veröffentlichungstag und Bekanntmachung des Hinweises auf die Patenterteilung: **29.06.1994**
(21) Anmeldenummer: 90104911.4
(22) Anmeldetag: 15.03.1990
(51) Int. Cl.: H02G 9/06, H02G 3/04

(54) **Kabelführungsrohrbündel aus einer Mehrzahl von Kunststoffrohren**
Cable conduit bundle comprising a plurality of plastics ducts
Faisceau de conduits de câble comprenant une pluralité de tuyaux en matière synthétique

(30) Priorität: 24.03.1989 DE 3909813
(43) Veröffentlichungstag der Anmeldung: 26.09.1990
(73) Patentinhaber: Dipl.-Ing. Dr. Ernst Vogelsang GmbH & Co. KG, D-45699 Herten (DE)
(72) Erfinder: Vogelsang, Horst, D-4352 Herten (DE)
(74) Vertreter: Andrejewski, Walter

(56) Entgegenhaltungen:
- EP-A- 0 231 504
- EP-A- 0 248 250
- AT-B- 373 737
- GB-A- 2 183 000

## Beschreibung

Die Erfindung betrifft Kabelführungsrohrbündel aus einer Mehrzahl von Kunststoffrohren. Der Ausdruck Kabelführungsrohrbündel besagt, daß in die einzelnen Kunststoffrohre Kabel eingezogen werden. Solche Kabelführungsrohrbündel sind aus einem ebenen Rohraggregat, bei dem die Einzelrohre durch Verbindungsstege vereinigt sind, zusammengelegt. Die ebenen Rohraggregate können ohne Schwierigkeiten fabrikmäßig aufgetrommelt, im aufgetrommelten Zustand transportiert und bei der Verlegung der Rohrbündel wieder abgetrommelt und zum Rohrbündel zusammengefaßt werden. Es versteht sich, daß das Rohrbündel der Fixierung bedarf. Das geschieht durch Umreifung oder besondere Verschlußelemente, die an den im Rohraggregat äußeren Kunststoffrohren angeordnet sind, die sich im Rohrbündel umfangsmäßig stoßen. Die Gestaltung insgesamt und die Fixierung können so geschehen, daß das Rohrbündel gerade und/oder bogenförmig verlegt werden kann. Der Werkstoff der Rohraggregate ist ausreichend elastisch verformbar eingestellt, um das beschriebene Auftrommeln und Abtrommeln, aber unter Verformung der Verbindungsstege auch das Zusammenlegen der Einzelrohre zum Rohrbündel, zuzulassen, z.B. kann mit Polyethylen oder mit Polyvinylchlorid gearbeitet werden. Die Rohraggregate werden im allgemeinen mit Hilfe von Kunststoffextrudern durch Strangpressen hergestellt.

Bei den bekannten Kabelführungsrohrbündeln, von denen die Erfindung ausgeht (AT-B-373 737), ergänzt sich eine Mehrzahl von Kunststoffrohren mit viereckigem oder sechseckigem Außenquerschnitt im Rohrbündel komplementär. Die Kunststoffrohre sind durch an den Ecken der Außenquerschnitte angeformte verformbare Verbindungsstege vereinigt und dadurch zu einem ebenen Rohraggregat entbündelbar. Bei den bekannten Kabelführungsrohrbündeln liegen die Seiten benachbarter Rohre nicht dicht an dicht aneinander, sondern es verbleiben vielmehr Fugen oder Spalten. Wird ein solches Rohrbündel unmittelbar, d.h. ohne ein umgebendes Schutzrohr im Erdreich verlegt, so kann Wasser in die Spalträume zwischen den Kunststoffrohren eindringen, was stört, weil das Rohrbündel dadurch gleichsam zu einem Drainagerohr wird und das eingedrungene Wasser in vorgeschaltete oder nachgeschaltete Kabelschächte einlaufen kann. Außerdem sind Kabelführungsrohrbündel bekannt (EP-A-0 231 504), die eine Mehrzahl von Kunststoffrohren aufweisen, die im wesentlichen einen dreieckigen Außenquerschnitt haben, deren Ecken aber stark verrundet sind. Bei diesem bekannten Rohrbündel ist nachteilig, daß im Innern der einzelnen, im Querschnitt abgewandelten dreieckförmigen Kunststoffrohre im Bereich der Ecken große Raumbereiche als Toträume frei bleiben, in die Kabel praktisch nicht einführbar sind. Die Rohraggregate sind zu ebenen Rohraggregaten entbündelbar. Diese bekannten Rohraggregate, aus denen die Rohrbündel zusammengelegt werden, sind jedoch mit einem Flächenträgheitsmoment ausgerüstet, welches dem Auftrommeln der Rohraggregate großen Widerstand entgegensetzt und unter Umständen sogar zu unerwünschten Querschnittsverformungen des dreieckigen Querschnitts der einzelnen Kunststoffrohre beim Auftrommeln führt. Bekannt sind auch Kabelführungsrohrbündel (GB-A-2 183 000), bei denen die zugehörigen Kunststoffrohre einen Kreisquerschnitt haben und über Verbindungsstege miteinander verbunden sind. Durch außen an die Kunststoffrohre angeformte Füllungselemente wird der Innenquerschnitt im Kabelführungsrohrbündel ausgefüllt. Diese Kabelführungsrohrbündel haben sich bewährt, die zugehörigen Kunststoffrohre sind jedoch relativ aufwendig herzustellen.

Der Erfindung liegt die Aufgabe zugrunde, ein Kabelführungsrohrbündel der angegebenen Zweckbestimmung zu schaffen, dessen Rohraggregat ohne Schwierigkeiten auftrommelbar und abtrommelbar ist, bei dem jedoch in der beschriebenen Weise störende Freiräume im Rohrbündel nicht in Kauf genommen werden müssen.

Zur Lösung dieser Aufgabe ist zunächst Gegenstand der Erfindung ein Kabelführungsrohrbündel aus einer Mehrzahl von Kunststoffrohren, die einen viereckigen Außenquerschnitt aufweisen, insbesondere Kabelführungsrohrbündel zur unmittelbaren Erdreichverlegung, wobei die einzelnen Kunststoffrohre im Rohrbündel sich komplementär ergänzen und wobei die Kunststoffrohre durch an einander gegenüberliegende Ecken des Außenquerschnitts angeformte verformbare Verbindungsstege linear mit jeweils benachbarten Kunststoffrohren vereinigt sind sowie dadurch zu einem ebenen Rohraggregat entbündelbar sind. Nach einer bevorzugten Ausführungsform der Erfindung weisen die einzelnen Kunststoffrohre einen rechteckigen und/oder quadratischen Außenquerschnitt auf.

Zur Lösung der Aufgabe ist außerdem Gegenstand der Erfindung ein Kabelführungsrohrbündel aus einer Mehrzahl von Kunststoffrohren, die einen sechseckigen Außenquerschnitt aufweisen, insbesondere Kabelführungsrohrbündel zur unmittelbaren Erdreichverlegung, wobei die einzelnen Kunststoffrohre im Rohrbündel sich komplementär ergänzen und wobei die Kunststoffrohre durch an einander gegenüberliegende Ecken des Außenquerschnittes angeformte verformbare Verbindungsstege linear mit jeweils benachbarten Kunststoffrohren vereinigt sind, sowie dadurch zu einem ebenen Rohraggragat entbündelbar sind, und wobei die Länge des Verbindungssteges zwischen den beiden letzten Kunststoffrohren des ebenen Rohraggregates einer Seitenlänge des sechseckigen Außenquerschnitts entspricht.

Es versteht sich, daß bei der Herstellung der erfindungsgemäßen Kabelführungsrohrbündel das Rohraggregat durch Strangpressen hergestellt wird, Das ebene, durch Strangpressen hergestellte Rohraggregat kann zu dem Rohrbündel der beschriebenen Struktur ohne Schwierigkeiten gebündelt werden. Auch im Rahmen der Erfindung wird man die Ecken des vieleckigen Außenquerschnittes der einzelnen Kunststoffrohre mit Verrundungen versehen, jedoch nach bevorzugter Ausführungsform der Erfindung mit möglichst geringen Verrundungen. - Haben bei einem erfindungsgemäßen Kabelführungsrohrbündel die einzelnen Kunststoffrohre exakt einen vieleckigen Außenquerschnitt, der so eingerichtet ist, daß das beschriebene komplementäre Zusammenlegen möglich ist, so fehlen Freiräume, wie sie bei einem Rohrbündel aus runden Kunststoffrohren systembedingt in Kauf genommen werden müssen, vollständig. Die Spalträume können bei Fertigung des Rohraggregates mit geringen Toleranzen und bei entsprechend genauer Kalibrierung so eingerichtet werden, daß auch die Spalträume praktisch nicht stören und jedenfalls der eingangs erläuterte, störende Drainagerohreffekt nicht auftreten kann. Kleine Verrundungen können so angebracht werden, daß sie sich bei einem erfindungsgemäßen Kabelführungsrohraggregat zu störenden Freiräumen, die die beschriebene Drainagefunktion aufnehmen können, nicht ergänzen.

Der Innenquerschnitt der einzelnen Kunststoffrohre in dem erfindungsgemäßen Kabelrohrbündel bzw. in dem entsprechenden Rohraggregat kann mit dem Außenquerschnitt übereinstimmen, er kann aber auch rund ausgeführt sein.

Im allgemeinen wird man ein erfindungsgemäßes Kabelführungsrohrbündel aus vier Kunststoffrohren aufbauen. Im Rahmen der Erfindung liegt es jedoch, mit mehr als vier Kunststoffrohren zu arbeiten, solange das Rohraggregat in der beschriebenen Weise komplementär zu einem Rohrbündel zusammenlegbar ist.

Im folgenden wird die Erfindung anhand einer lediglich ein Ausführungsbeispiel darstellenden Zeichnung ausführlicher erläutert. Es zeigen in schematischer Darstellung
- Fig. 1: den Querschnitt durch ein erfindungsgemäßes Kabelführungsrohrbündel aus vier quadratischen Kunststoffrohren,
- Fig. 2: einen Querschnitt durch das dem Rohrbündel der Fig. 1 entsprechende ebene Rohraggregat,
- Fig. 3: eine andere Ausführungsform des Gegenstandes der Fig. 1,
- Fig. 4: entsprechend der Fig. 2 das Rohraggregat des Gegenstandes der Fig. 3,
- Fig. 5: eine weitere Ausführungsform des Gegenstandes der Fig. 1, und
- Fig. 6: entsprechend der Fig. 2 das Rohraggregat des Gegenstandes der Fig. 5.

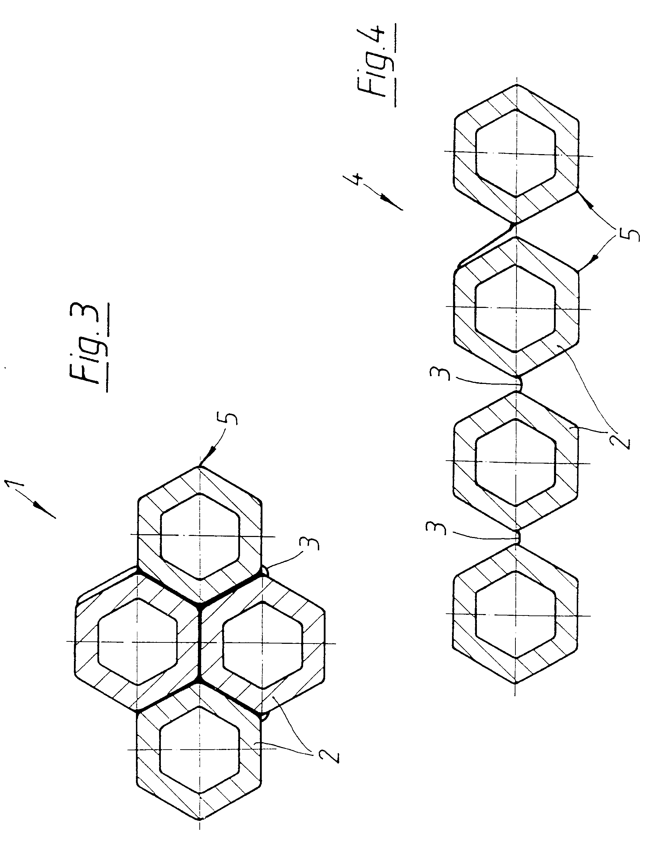

Die in den Figuren dargestellten Rohrbündel sind Kabelführungsrohrbündel 1, d. h. zur Aufnahme von Kabeln bestimmt. Sie bestehen aus einer Mehrzahl von Kunststoffrohren 2, und zwar im Ausführungsbeispiel jeweils aus vier Kunststoffrohren 2. Diese besitzen einen vieleckigen Außenquerschnitt mit mehr als drei Ecken. Die Kabelführungsrohrbündel 1 sind insbesondere zur unmittelbaren Erdreichverlegung bestimmt. Die Außenquerschnitte der Kunststoffrohre 2 sind so gestaltet, daß sich die einzelnen Kunststoffrohre 2 im Kabelführungsrohrbündel 1 komplementär ergänzen. Das verleiht dem Kabelführungsrohrbündel 1 eine besondere Gestaltsstabilität, auch wenn das Kabelführungsrohrbündel 1 bei der Erdverlegung im Bogen geführt werden muß, gleichgültig, ob das Kabelführungsrohrbündel 1 im übrigen durch Umreifung oder Verschlußelemente stabilisiert wird. Man erkennt aus den Fig. 3 und 4, daß die Kunststoffrohre 2 durch angeformte verformbare Verbindungsstege 3 linear vereinigt sind und zu einem ebenen Rohraggregat 4 entbündelbar sind. Umgekehrt kann das ebene Rohraggregat 4 zu dem Kabelführungsrohrbündel der beschriebenen Struktur unschwer gebündelt werden. Das ebene Rohraggregat 4 ist durch entsprechende werkstoffmäßige Einstellung unter elastischer Verformung der einzelnen Kunststoffrohre 2 und der Verbindungsstege 3 auftrommelbar und abtrommelbar, wie es auch bei Kabeln üblich ist. Die Ecken 5 der Kunststoffrohre 2 in den Rohraggregaten 4 sind ein wenig verrundet. Der Innenquerschnitt der Kunststoffrohre 2 kann dem Außenquerschnitt entsprechen, oder rund ausgeführt sein. Beides wurde in den Zeichnungen angedeutet.

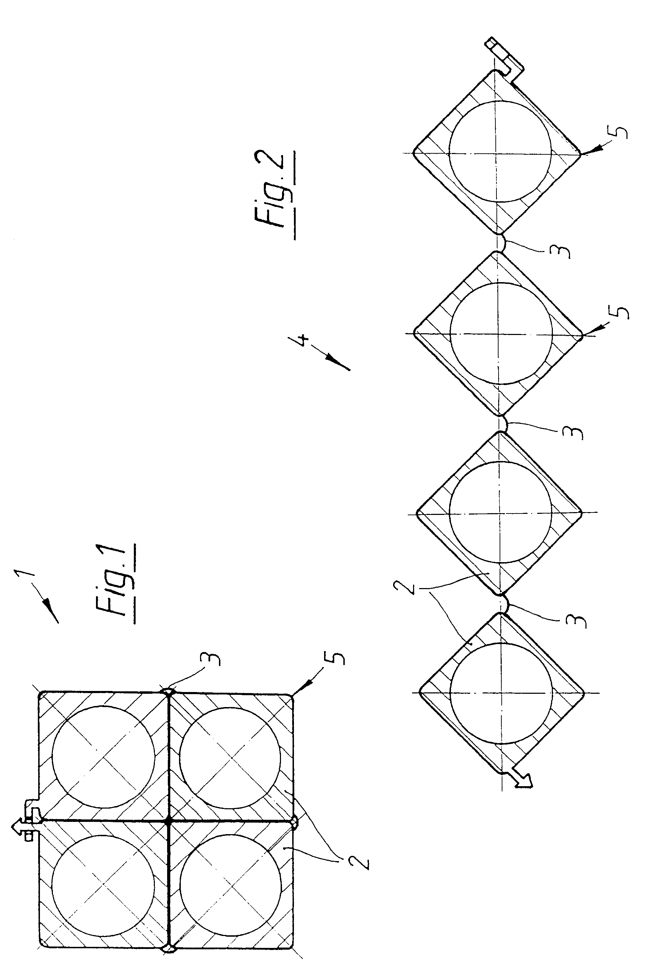

Bei der Ausführungsform nach den Fig. 1 und 2 sind die einzelnen Kunststoffrohre 2 mit einem rechteckigen Außenquerschnitt versehen. Bei der Ausführungsform nach den Fig. 3 und 4 besitzen die Kunststoffrohre einen sechseckigen Außenquerschnitt. In beiden Fällen sind die Querschnitte der Kunststoffrohre 2 regelmäßig vieleckig. - Man entnimmt aus den Fig. 1 und 3, daß bei den erfindungsgemäßen Kabelführungsrohrbündeln 1 störende Freiräume im Rohrbündel, die eine unerwünschte Drainagefunktion aufnehmen könnten, vermeidbar sind.

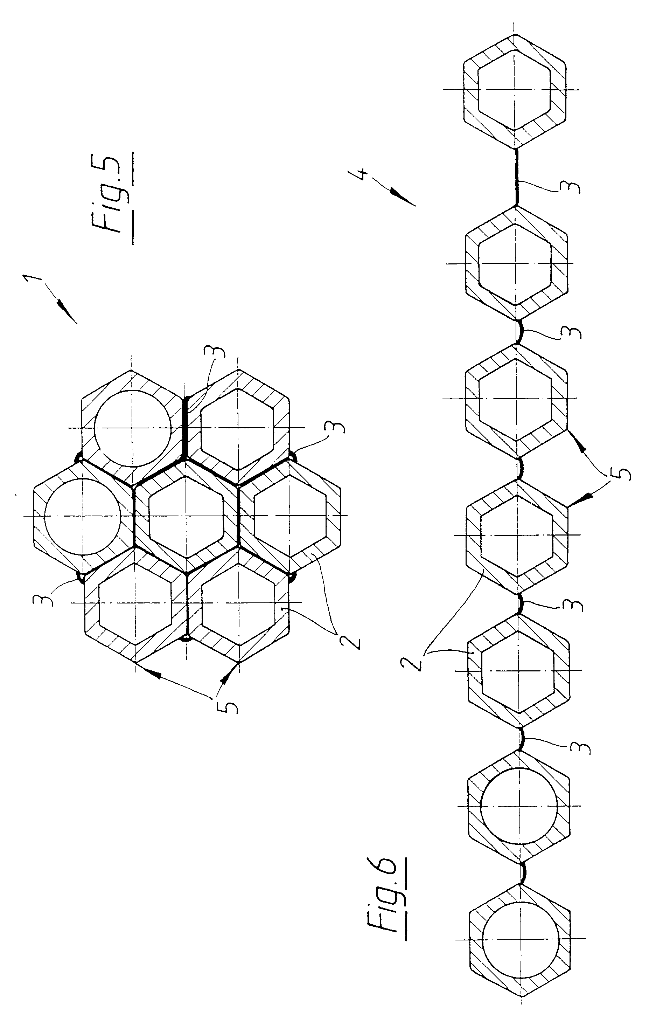

Bei der Ausführungsform nach Fig. 5 handelt es sich um Kunststoffrohre 2, die regelmäßig sechseckigen Querschnitt aufweisen. Sie sind spiralförmig zum Rohrbündel zusammengelegt. Wie dazu die Verbindungsstege 3 anzuordnen sind, zeigt die Fig. 6. Die Verbindungsstege 3 wurden in den Fig. 5 und 6 übertrieben dick gezeichnet.

## Patentansprüche

1. Kabelführungsrohrbündel aus einer Mehrzahl von Kunststofffrohren (2), die einen viereckigen Außenquerschnitt aufweisen, insbesondere Kabelführungsrohrbündel (1) zur unmittelbaren Erdreichverlegung, wobei die einzelnen Kunststoffrohre (2) im Rohrbündel sich komplementär ergänzen und wobei die Kunststoffrohre (2) durch an einander gegenüberliegende Ecken (5) des Außenquerschnitts angeformte verformbare Verbindungsstege (3) linear mit jeweils benachbarten Kunststoffrohren (2) vereinigt sind sowie dadurch zu einem ebenen Rohraggregat (4) entbündelbar sind.

2. Kabelführungsrohrbündel aus einer Mehrzahl von Kunststofffrohren (2), die einen sechseckigen Außenquerschnitt aufweisen, insbesondere Kabelführungsrohrbündel (1) zur unmittelbaren Erdreichverlegung, wobei die einzelnen Kunststoffrohre (2) im Rohrbündel sich komplementär ergänzen und wobei die Kunststofffrohre (2) durch an einander gegenüberliegende Ecken (5) des Außenquerschnittes angeformte verformbare Verbindungsstege (3) linear mit jeweils benachbarten Kunststofffrohren (2) vereinigt sind sowie dadurch zu einem ebenen Rohraggregat (4) entbündelbar sind, und wobei die Länge des Verbindungssteges (3) zwischen den beiden letzten Kunststoffrohren (2) des ebenen Rohraggregates (4) einer Seitenlänge des sechseckigen Außenquerschnitts entspricht.

3. Kabelführungsrohrbündel nach Anspruch 1, dadurch gekennzeichnet, daß die einzelnen Kunstoffrohre (2) rechteckigen und/oder quadratischen Außenquerschnitt aufweisen.

4. Kabelführungsrohrbündel nach einem der Ansprüche 1 bis 3, dadurch gekennzeichnet, daß die Ecken (5) des vieleckigen Außenquerschnittes mit Verrundungen versehen sind.

5. Kabelführungsrohrbündel nach einem der Ansprüche 1 bis 4, dadurch gekennzeichnet, daß die Außenquerschnitte der einzelnen Kunststoffrohre (2) regelmäßig vieleckig ausgeführt sind.

## Claims

1. A Cable conduit bundle consisting of a plurality of tubes made of plastics (2) having a rectangular outside cross section, in particular a cable conduit bundle (1) for direct burying, whereby the individual plastic pipes (2) in the pipe bundle complementarily complement each other, and whereby the plastic pipes (2) are linearly assembled with respective adjacent plastic pipes (2) by means of ductile connecting webs (3) joined by outside cross section corners (5) facing each other, and thereby can be unbundled to form a flat pipe aggregate (4).

2. A cable conduit bundle consisting of a plurality of tubes made of plastics (2) having a hexagonal outside cross section, in particular a cable conduit bundle (1) for direct burying, whereby the individual plastic pipes (2) in the pipe bundle complementarily complement each other, and whereby the plastic pipes (2) are linearly assembled with respective adjacent plastic pipes (2) by means of ductile connecting webs (3) joined by outside cross section corners (5) facing each other, and thereby can be unbundled to form a flat pipe aggregate (4), and whereby the length of the connecting web (3) between the last two plastic pipes (2) of the flat pipe aggregate (4) is equal to one side length of the hexagonal outside cross section.

3. A cable conduit bundle according to claim 1, characterized in that the individual plastic pipes (1) comprise rectangular and/or hexagonal outside cross sections.

4. A cable conduit bundle according to any of claims 1 to 3, characterized in that the corners (5) of the polygonal outside cross section are provided with roundings.

5. A cable conduit bundle according to any of claims 1 to 4, characterized in that the outside cross sections of individual plastic pipes (2) are regularly designed in polygonal form.

## Revendications

1. Faisceau de gaines de câbles composé de plusieurs tubes en plastique (2) présentant une section extérieure quadrangulaire, en particulier faisceau de gaines de câbles (1) destiné a une pose directe en pleine terre, les différents tubes en plastique (2) se complétant pour former le faisceau de gaines et les tubes en plastique (2) étant reliés linéairement aux tubes en plastique (2) respectivement voisins par des entretoises d'assemblage (3) déformables surmoulées au niveau des angles se faisant face (5) de la section extérieure de même que pouvant ainsi être détachés pour se transformer en groupe de tubes plan (4).

2. Faisceau de gaines de câbles composé de plusieurs tubes en plastique (2) présentant une section extérieure hexagonale, en particulier faisceau de gaines de câbles (1) destiné à une pose directe en pleine terre, les différents tubes en plastique (2) se complétant pour former le faisceau de gaines et les tubes en plastique (2) étant réunis linéairement aux tubes en plastique (2) respectivement voisins par des entretoises d'assemblage (3) déformables surmoulées au niveau des angles se faisant face (5) de la section extérieure de même que pouvant ainsi être détachés pour se transformer en groupe de tubes plan (4), et la longueur de l'entretoise d'assemblage (3) entre les deux derniers tubes en plastique (2) du groupe de tubes plan (4) correspondant à une longueur latérale de la section extérieure hexagonale.

3. Faisceau de gaines de câbles selon la revendication 1, caractérisé par le fait que les différents tubes en plastique (2) présentent une section extérieure rectangulaire et/ou carrée.

4. Faisceau de gaines de câbles selon l'une des revendications 1 à 3, caractérisé par le fait que les angles (5) de la section extérieure polygonale sont munis de parties arrondies.

5. Faisceau de gaines de câbles selon l'une des revendications 1 à 4, caractérisé par le fait que les sections extérieures des différentes tubes en plastique (2) sont régulièrement polygonales.
